# EUROPÄISCHE PATENTSCHRIFT

(11) **EP 3 212 972 B1**
(45) Veröffentlichungstag und Bekanntmachung des Hinweises auf die Patenterteilung: **18.04.2018**
(21) Anmeldenummer: 16823187.6
(22) Anmeldetag: 14.12.2016
(51) Int. Cl.: F16J 15/34

(54) **WELLENHÜLSE FÜR EINE DICHTUNGSVORRICHTUNG UND EINE SOLCHE DICHTUNGSVORRICHTUNG**
SHAFT SLEEVE FOR A SEALING DEVICE AND A SEALING DEVICE OF THIS TYPE
MANCHE D'ARBRE POUR DISPOSITIF D'ÉTANCHÉITÉ ET DISPOSITIF D'ÉTANCHÉITÉ DE CE TYPE

(30) Priorität: 21.01.2016 DE 102016101044
(43) Veröffentlichungstag der Anmeldung: 06.09.2017
(73) Patentinhaber: Hecker Holding GmbH & Co. KG, 71093 Weil im Schönbuch (DE)
(72) Erfinder: WEBER, Frank, 70771 Leinfelden-Echterdingen (DE); GUETLEIN, André, 72124 Pliezhausen (DE); THIELE, Andreas, 71093 Weil im Schoenbuch (DE)
(74) Vertreter: DREISS Patentanwälte PartG mbB
(86) Internationale Anmeldenummer: PCT/EP2016/080987
(87) Internationale Veröffentlichungsnummer: WO 2017/125212

(56) Entgegenhaltungen:
- WO-A1-2007/001233
- US-A- 5 217 234
- US-A- 5 544 897

## Beschreibung

Die vorliegende Erfindung betrifft eine Wellenhülse für eine Dichtungsvorrichtung, mit einem sich in einer axialen Richtung erstreckenden Hülsenabschnitt, umfassend einen Aufnahmebereich für ein Gleitringpaar am Außenumfang des Hülsenabschnitts. Zudem betrifft die Erfindung eine Dichtungsvorrichtung, mit einer Wellenhülse mit einem sich in einer axialen Richtung erstreckenden Hülsenabschnitt, einem am Außenumfang des Hülsenabschnitts ausgebildeten Aufnahmebereich, einem im Aufnahmebereich angeordneten Gleitringpaar, einem Zulauf zur Zuführung einer Sperrflüssigkeit zum Gleitringpaar und einem Ablauf zur Abführung der Sperrflüssigkeit vom Gleitringpaar. Aus dem Stand der Technik sind Wellenhülsen für Dichtungsvorrichtungen und solche Dichtungsvorrichtungen, insbesondere in Form von Gleitringdichtungen, bekannt. Eine derartige Dichtung ist beispielsweise in DE 10 2014 203 336 A1 gezeigt.

Bei Gleitringdichtungen ist problematisch, dass im Betrieb hohe Temperaturen auftreten. Um Schäden an Gleitringdichtung und ggf. auch an weiteren Komponenten zu vermeiden, muss die entstehende Wärme abgeführt werden. Hierzu kann ein Wärme aufnehmendes Sperrmedium eingesetzt werden, welches mittels einer Pumpeinrichtung durch die Gleitringdichtung zirkuliert wird und Wärme abführt. Allerdings ist bei derartigen Gleitringdichtungen nachteilig, dass diese zum Erreichen einer hinreichenden Wärmeabführung einer Vielzahl an Komponenten zur Führung des Sperrmediums bedürfen. Daher weisen diese einen komplexen Aufbau auf und beanspruchen insbesondere radial einen großen Bauraum. Bei Reduzierung des radialen Bauraums besteht beispielsweise auf Grund einer Reduzierung der Bauteilquerschnitte stets die Gefahr, dass keine hinreichende Kühlleistung erreicht wird. Ein dauerhaft zuverlässiger Betrieb ist damit nicht gewährleistet. US 5 544 897 A, US 5 217 234 A und WO 2007/001233 A1 zeigen Dichtungsvorrichtungen mit Wellenhülsen mit Merkmalen des Oberbegriffs von Anspruch 1.

Der Erfindung liegt die Aufgabe zugrunde, mit einfachen konstruktiven Mitteln und bei geringem Platzbedarf einen zuverlässigen Betrieb einer Dichtungsvorrichtung zu ermöglichen.

Die voranstehende Aufgabe wird durch eine Wellenhülse mit den Merkmalen des Anspruchs 1 gelöst. Danach zeichnet sich die Wellenhülse dadurch aus, dass im Hülsenabschnitt in im Wesentlichen axialer Richtung orientierte Kanäle zur Durchführung eines Sperrmediums ausgebildet sind, die sich über einen Teil des Hülsenabschnitts erstrecken und den Aufnahmebereich in axialer Richtung zumindest teilweise überlappen und dass die Kanäle endseitig jeweils Öffnungen zum Außenumfang des Hülsenabschnitts hin aufweisen.

Eine solche Ausgestaltung hat den Vorteil, dass radial ein vergleichsweise geringer Bauraum erzielt werden kann, da Kanäle zur Führung des Sperrmediums nicht erst durch weitere mit der Wellenhülse zusammenzusetzende Bauelemente ausgebildet werden müssen, sondern bereits in der Wellenhülse integriert sind. Damit werden die Gleitringoberflächen wirknah umspült. Zudem ist damit der konstruktive Aufwand reduziert und eine Montage erleichtert. Dadurch, dass die Kanäle den Aufnahmebereich in axialer Richtung zumindest teilweise überlappen, findet eine Wärmeabführung direkt aus dem Bereich des Gleitringpaars statt. Endseitig weisen die Kanäle jeweils Öffnungen zum Außenumfang des Hülsenabschnitts hin auf. Mit anderen Worten sind die Öffnungen radial nach außen orientiert. Somit ist bei einer radial kleinbauenden Bauweise eine hinreichende Kühlung gewährleistet.

Weiter erfindungsgemäß ist die Wellenhülse einstückig ausgebildet. Hiermit ist eine stabile und kompakte Bauweise zu erreichen.

Im Konkreten kann der sich im montierten Zustand zwischen dem Außenumfang des Hülsenabschnitts im Aufnahmebereich und dem Gleitringpaar ergebende Ringraum zur Zuführung oder Zuleitung eines Sperrmediums zum Gleitringpaar dienen, beispielsweise von einem gehäuseseitigen Zulauf. Das zugeführte Sperrmedium nimmt dabei Wärme des Gleitringpaares auf. Die Kanäle können zur Abführung oder Rückführung des Sperrmediums vom Gleitringpaar weg dienen, beispielsweise zu einem gehäuseseitigen Ablauf. Durch diese durch die Kanäle ermöglichte Zirkulation wird eine Zwangsentlüftung ermöglicht.

Unter "im Wesentlichen axialer Richtung" sind Richtungen zu verstehen, die zur axialen Richtung einen Winkel von ± 15°, vorzugsweise ± 10°, weiter vorzugsweise ± 5°, noch weiter vorzugsweise ±2°, aufweisen.

Abgesehen von den endseitigen Öffnungen sind die im Hülsenabschnitt ausgebildeten Kanäle weiter erfindungsgemäß radial geschlossen, so dass ein Sperrmedium entlang eines Kanals geführt ist.

Als Sperrmedium kann insbesondere eine Sperrflüssigkeit zum Einsatz kommen.

Die Wellenhülse weist einen axialen Durchgang zur Aufnahme einer Welle auf, mit der die Wellenhülse drehfest verbindbar oder verbunden ist. Die drehfeste Verbindung zwischen Welle und Wellenhülse kann durch einen Klemmring oder Mitnehmer hergestellt werden. Die Wellenhülse kann auch als "Wellenschutzhülse" bezeichnet werden.

Das Gleitringpaar dient zur Abdichtung einer Produktseite eines Maschinengehäuses gegenüber einer Atmosphärenseite. Das Gleitringpaar weist einen, insbesondere in axialer Richtung federbeaufschlagten, Gleitring sowie einen, insbesondere drehfest mit der Wellenhülse verbundenen, Gegenring auf. Die aufeinander gleitenden Flächen von Gleitring und Gegenring bilden einen primären Dichtspalt. Der Einfachheit halber wird im Folgenden überwiegend der Begriff "Gleitring" verwendet.

Als weitere Dichtungsanordnung kann ein zweites Gleitringpaar oder ein Radialwellendichtring vorgesehen sein. Eine zusätzliche Abdichtung der Komponenten kann über Nebendichtungen, beispielsweise über O-Ringe oder Manschetten, erfolgen.

Vorteilhafterweise können die Kanäle den Aufnahmebereich der Gleitringpaarung vollständig überlappen. Damit ist eine wirknahe Umspülung der Gleitringoberflächen über die gesamte Gleitringpaarung und/oder den gesamten Aufnahmebereich hinweg ermöglicht. Eine gleichmäßige und hinreichende Wärmeabführung kann erreicht werden.

Im Konkreten kann der Hülsenabschnitt einen Bund zum Kontakt mit einem Gleitring oder Gegenring aufweisen, der den Aufnahmebereich an einer Seite begrenzt. Dabei kann der Bund insbesondere radial nach außen vom Hülsenabschnitt abragen. Der Bund kann dabei zur seitlichen Aufnahme und Abdichtung des Gleitrings dienen. Damit ist die axiale Anordnung des Gleitrings zur Produktseite hin definiert.

Zweckmäßigerweise kann am Bund ein dem Aufnahmebereich zugewandtes Mitnahmeelement zur drehfesten Kopplung eines Gleitrings oder Gegenrings angeordnet sein. Dabei kann das Mitnahmeelement insbesondere einstückig mit dem Bund ausgebildet sein. Dies erspart einen Fügevorgang zur Anbindung des Mitnahmeelements am Bund. Dabei ist denkbar, dass das Mitnahmeelement als ein in axialer Richtung orientierter, insbesondere kreiszylindrischer oder rechteckiger, Stift ausgebildet ist.

Die Kanäle können jeweils einen Querschnitt in Form eins Ringsegments aufweisen. Damit ist bei einer stabilen Ausgestaltung des Hülsenabschnitts durch die Kanäle ein hohes Fördervolumen möglich. Insbesondere lassen sich durch Ausgestaltung der Kanäle als Ringsegmente gleichmäßige Wandstärken der die radial nach außen und/oder nach innen begrenzenden Wandabschnitte der Kanäle erreichen. Durch die zwischen zwei benachbarten Kanalabschnitten kanallosen Hülsenabschnittsegmente ist eine hinreichende Stabilität des Hülsenabschnitts gewährleistet. Anzahl und Größe der Ringsegmente lassen sich variieren. Denkbar ist beispielsweise eine Anzahl von acht Ringsegmenten im Hülsenabschnitt mit jeweils einem Ringsegment mit einem Winkel von 20° bis 40°.

Im Konkreten ist denkbar, dass jeweils eine erste der endseitigen Öffnungen der Kanäle am Bund angeordnet ist. Hiermit ist eine Förderung des Sperrmediums, den Aufnahmebereich überlappend, bis zum hin Bund möglich, was eine gleichmäßige Wärmeabführung vom Gleitringpaar erlaubt.

Zweckmäßigerweise kann jeweils eine zweite der endseitigen Öffnungen der Kanäle außerhalb des Aufnahmebereichs an der von der ersten endseitigen Öffnung abgewandten Seite des Aufnahmebereichs angeordnet sein. Mit anderen Worten ist die zweite der endseitigen Öffnungen an der von der ersten endseitigen Öffnung abgewandten Seite der Gleitringpaarung angeordnet. Hiermit wird eine zuverlässige Kühlung des Gleitrings begünstigt. Zudem ist Platz für einen Zulauf zur Zuführung eines Sperrmediums geschaffen, der zwischen Aufnahmebereich und zweiter endseitiger Öffnung angeordnet sein kann.

Die Wellenhülse kann insbesondere ganz oder teilweise durch ein generatives Fertigungsverfahren hergestellt sein, beispielsweise durch einen Laser- oder Elektronenstrahl. Dabei kann es sich um ein 3D-Drucken, insbesondere um einen 3D-Metalldruck handeln. Hiermit lässt sich eine einfache Herstellung und eine stabile Ausgestaltung der Wellenhülse erreichen, wobei auch Hinterschnitte vorgesehen sein können. Durch die einstückige Ausgestaltung ist eine stabile Ausführung der Wellenhülse erreicht, wobei der radiale Bauraum vergleichsweise gering gehalten werden kann.

Die eingangs genannte Aufgabe wird auch durch eine Dichtungsvorrichtung mit den Merkmalen des nebengeordneten Patentanspruchs gelöst. Die Dichtungsvorrichtung kann insbesondere als Gleitringdichtung ausgebildet sein.

Zur bevorzugten Ausgestaltung der Dichtungsvorrichtung können die im Zusammenhang mit der Wellenhülse beschriebenen Maßnahmen oder Maßnahmen der nachfolgenden Figurenbeschreibung dienen.

Hinsichtlich der mit einer solchen Dichtungsvorrichtung erzielbaren Vorteile sei auf die diesbezüglichen Ausführungen zur Wellenhülse verwiesen.

Die Erfindung wird im Folgenden anhand der Figuren näher erläutert. Es zeigen:
- Fig.1: in einer perspektivischen, teilweise geschnittenen Ansicht eine Ausführungsform einer Dichtungsvorrichtung mit montierter Wellenhülse;
- Fig.2: in einer geschnittenen Seitenansicht die Dichtungsvorrichtung aus Fig.1; und
- Fig.3: in einer perspektivischen, teilweise geschnittenen Ansicht die Wellenhülse der Dichtungsvorrichtung aus Fig.1 mit teilweise abgeschnittenem Hülsenabschnitt.

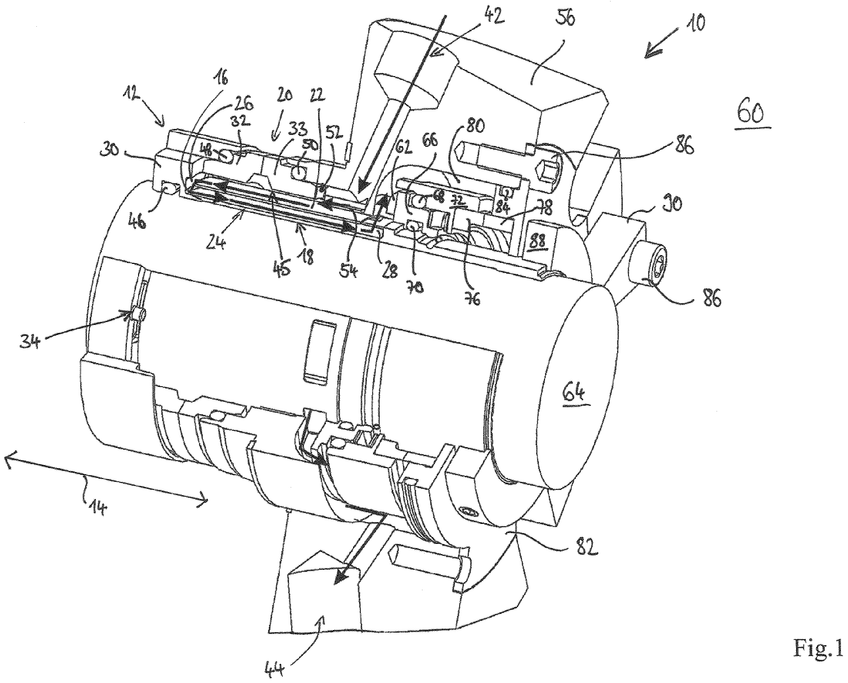

Figur 1 zeigt eine Dichtungsvorrichtung 10 mit einer Wellenhülse 12. Die Dichtungsvorrichtung 10 ist im Ausführungsbeispiel als Gleitringdichtung ausgebildet.

Die Wellenhülse 12 weist einen sich in einer axialen Richtung 14 erstreckenden Hülsenabschnitt 16 auf. Der Hülsenabschnitt 16 umfasst einen Aufnahmebereich 18 für ein Gleitringpaar 20 am Außenumfang 22 des Hülsenabschnitts 16.

Im Hülsenabschnitt 16 sind in im Wesentlichen axialer Richtung 14 orientierte Kanäle 24 zur Durchführung eines Sperrmediums ausgebildet. Die Kanäle 24 erstrecken sich über einen Teil des Hülsenabschnitts 16 und überlappen den Aufnahmebereich 18 in axialer Richtung 14.

Die Kanäle 24 weisen endseitig jeweils Öffnungen 26, 28 zum Außenumfang 22 des Hülsenabschnitts 16 hin auf.

Es ist von Vorteil, wenn - wie im Ausführungsbeispiel - die Kanäle 24 den Aufnahmebereich 18 des Gleitringpaars 20 vollständig überlappen.

Der Hülsenabschnitt 16 weist einen radial abragenden Bund 30 zum Kontakt mit einem als Gegenring eingesetzten Gleitring 32 auf, der den Aufnahmebereich 18 an einer Seite begrenzt. Mit dem Gegenring 32 ist ein Gleitring 33 in gleitendem Kontakt.

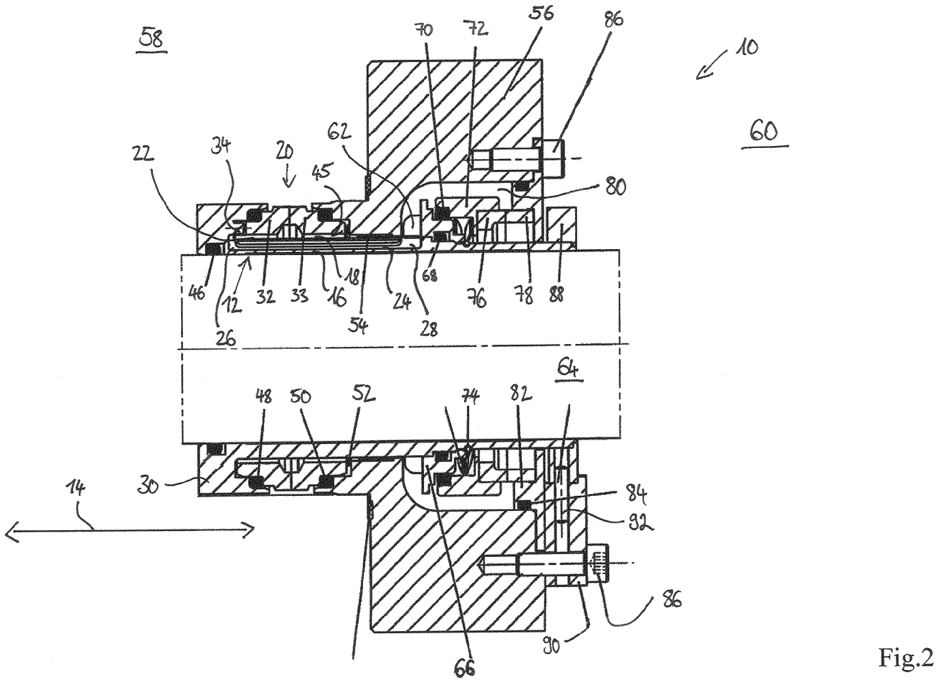

Am Bund 30 ist im Aufnahmebereich 18 zugewandt ein einstückig mit dem Bund 30 ausgebildetes Mitnahmeelement 34 zur drehfesten Kopplung des Gegenrings 32 angeordnet (vgl. Figur 2). Das Mitnahmeelement 34 ist als in axialer Richtung 14 orientierter Stift ausgebildet.

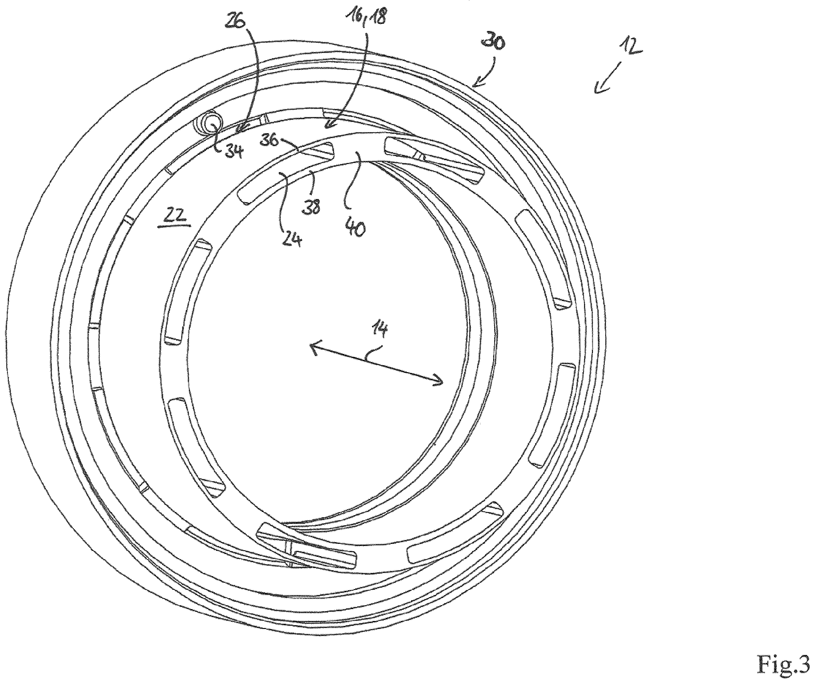

Die Kanäle 24 weisen jeweils einen Querschnitt in Form eines Ringsegments auf (vgl. Figur 3). Dabei sind die die Kanäle 24 begrenzenden radial äußeren und radial inneren Wandabschnitte 36, 38 mit einer gleichmäßigen Wanddicke ausgebildet. Zwischen zwei benachbarten Kanälen 24 befinden sich kanallose Hülsenabschnittsegmente 40.

Eine erste der endseitigen Öffnungen 26 der Kanäle 24 ist am Bund 30 angeordnet (vgl. Figur 1).

Eine zweite der endseitigen Öffnungen 28 der Kanäle 24 ist außerhalb des Aufnahmebereichs 18 an der von der ersten endseitigen Öffnung 26 abgewandten Seite des Aufnahmebereichs 18 ausgebildet.

Die Wellenhülse 12 ist durch ein generatives Fertigungsverfahren, nämlich einem 3D-Metalldruck hergestellt.

Die Dichtungsvorrichtung 10 ist als Gleitringdichtung ausgebildet. Die Dichtungsvorrichtung 10 weist eine Wellenhülse 12 mit einem sich in einer axialen Richtung 14 erstreckenden Hülsenabschnitt 16, einem am Außenumfang des Hülsenabschnitts 16 ausgebildeten Aufnahmebereich 18 und einem im Aufnahmebereich 18 angeordneten Gleitringpaar 20 auf.

Außerdem umfasst die Dichtungsvorrichtung 10 einen Zulauf 42 zur Zuführung eines Sperrmediums zum Gleitringpaar 20. Zudem weist die Dichtungsvorrichtung 10 einen Ablauf 44 zur Abführung des Sperrmediums vom Gleitringpaar 20 auf.

Im Hülsenabschnitt 16 sind in im Wesentlichen axialer Richtung 14 orientierte Kanäle 24 ausgebildet. Die Kanäle 24 erstrecken sich über einen Teil des Hülsenabschnitts 16 und überlappen den Aufnahmebereich 18 in axialer Richtung 14 (vgl. Figur 1).

Die Kanäle 24 weisen endseitig Öffnungen 26, 28 zum Außenumfang 22 des Hülsenabschnitts 16 auf. Der Zulauf 42 und der Ablauf 44 sind zur Förderung des Sperrmediums mittels der Kanäle 24 strömungsverbunden.

Zwischen dem Innenumfang des Gleitringpaars 20 und dem Außenumfang 22 der Wellenhülse 12 befindet sich ein Ringraum 45, in den Sperrmedium durch den Zulauf 42 zugeführt wird.

Der Gegenring 32 ist mittels O-Ringen 46, 48 gegenüber dem Bund 30 abgedichtet. Der Gleitring 33, der mit dem Gegenring 32 in Kontakt ist, ist mittels eines O-Rings 50 abgedichtet und mittels einer Feder 52 gegen den Gegenring gespannt.

Eine Hülse 54, die zur Zuleitung des durch den Zulauf 42 geführten Sperrmediums zum Gleitringpaar 20 dient, ist drehfest mit einem Gehäuse 56 verbunden. Das Gehäuse 56 trennt die Produktseite 58 durch einen engen Spalt von einer Atmosphärenseite 60.

Ein Lüfterrad 62, welches drehfest mit der Welle 64 oder der Wellenhülse 12 verbunden ist, dient zur Förderung des Sperrmediums durch den durch Zulauf, den Ringraum 45 zwischen Hülsenabschnitt 16 und Gleitringpaar 20, die Kanäle 24 und den Ablauf 44 gebildeten Kreislauf. Das Lüfterrad 62 ist mit einem Mitnehmer 66 verbunden. Der Mitnehmer 66 ist mittels O-Ringen 68, 70 abgedichtet.

Benachbart zum Mitnehmer 66 ist ein Gleitringträger 72 angeordnet. Der Mitnehmer 66 ist mittels einer Sicherungsfeder 74 gesichert. Am Gleitringträger 72 ist ein Rechteckring 76 aufgenommen, der mit einem weiteren, gehäusefest angeordneten Gegenring 78 in Kontakt ist.

Die Gehäuseöffnung 80 ist mittels eines Gehäusedeckels 82 verschlossen. Der Gehäusedeckel 82 ist mittels eines O-Rings 84 abgedichtet und mittels Schrauben 86 am Gehäuse 56 befestigt.

Ein Klemmring 88, der auch als Mitnehmer 88 bezeichnet werden kann, klemmt die Wellenhülse 12 auf die Welle 64. Dadurch sind Wellenhülse 12 und Welle 64 drehfest miteinander verbunden.

Zur Erleichterung der Montage ist eine Montagehilfe 90 vorgesehen, welche mittels einer der Schrauben 86 am Gehäuse 56 befestigt ist und mittels eines Stifts 92 in den Klemmring 88 eingreift.

Die Montagehilfe 90 gibt die Position des Klemmrings 88 relativ zum Gehäuse 56 vor und soll einen fehlerhaften Zusammenbau, beispielsweise auf Grund fehlerhafter Positionierung oder zu starken Anziehens von Komponenten aneinander verhindern.

## Patentansprüche

1. Wellenhülse (12) für eine Dichtungsvorrichtung (10), mit einem sich in einer axialen Richtung (14) erstreckenden Hülsenabschnitt (16), umfassend einen Aufnahmebereich (18) für ein Gleitringpaar (20) am Außenumfang (22) des Hülsenabschnitts (16), **dadurch gekennzeichnet, dass** die Wellenhülse (12) einstückig ausgebildet ist und dass im Hülsenabschnitt (16) in im Wesentlichen axialer Richtung (14) orientierte und radial geschlossene Kanäle (24) zur Durchführung eines Sperrmediums ausgebildet sind, die sich über einen Teil des Hülsenabschnitts (16) erstrecken und den Aufnahmebereich (18) in axialer Richtung (14) zumindest teilweise überlappen und dass die Kanäle (24) endseitig jeweils Öffnungen (26, 28) zum Außenumfang (22) des Hülsenabschnitts (16) hin aufweisen.

2. Wellenhülse (12) nach Anspruch 1, **dadurch gekennzeichnet, dass** die Kanäle (24) den Aufnahmebereich (18) des Gleitringpaars (20) vollständig überlappen.

3. Wellenhülse (12) nach Anspruch 1 oder 2, **dadurch gekennzeichnet, dass** der Hülsenabschnitt (16) einen Bund (30) zum Kontakt mit einem Gleitring (32) aufweist, der den Aufnahmebereich (18) an einer Seite begrenzt.

4. Wellenhülse (12) nach Anspruch 3, **dadurch gekennzeichnet, dass** am Bund (30) dem Aufnahmebereich (18) zugewandt ein insbesondere einstückig mit dem Bund (30) ausgebildetes Mitnahmeelement (34) zur drehfesten Kopplung eines Gleitrings (32) angeordnet ist.

5. Wellenhülse (12) nach einem der vorhergehenden Ansprüche, **dadurch gekennzeichnet, dass** die Kanäle (24) jeweils einen Querschnitt in Form eines Ringsegments aufweisen.

6. Wellenhülse (12) nach einem der vorhergehenden Ansprüche, **dadurch gekennzeichnet, dass** jeweils eine erste der endseitigen Öffnungen (26) der Kanäle (24) am Bund (30) angeordnet ist.

7. Wellenhülse (12) nach einem der vorhergehenden Ansprüche, **dadurch gekennzeichnet, dass** jeweils eine zweite der endseitigen Öffnungen (28) der Kanäle (24) außerhalb des Aufnahmebereichs (18) an der von der ersten endseitigen Öffnung (26) abgewandten Seite des Aufnahmebereichs (18) ausgebildet ist.

8. Wellenhülse (12) nach einem der vorhergehenden Ansprüche, hergestellt durch ein generatives Fertigungsverfahren.

9. Dichtungsvorrichtung (10), insbesondere Gleitringdichtung, mit einer Wellenhülse (12) mit einem sich in einer axialen Richtung (14) erstreckenden Hülsenabschnitt (16), einem am Außenumfang (22) des Hülsenabschnitts (16) ausgebildeten Aufnahmebereich (18), einem im Aufnahmebereich (18) angeordneten Gleitringpaar (20), einem Zulauf (42) zur Zuführung eines Sperrmediums zum Gleitringpaar (20) und einem Ablauf (44) zur Abführung des Sperrmediums vom Gleitringpaar (20), **dadurch gekennzeichnet, dass** die Wellenhülse (12) einstückig ausgebildet ist, dass im Hülsenabschnitt (16) in im Wesentlichen axialer Richtung (14) orientierte und radial geschlossene Kanäle (24) ausgebildet sind, die sich über einen Teil des Hülsenabschnitts (16) erstrecken und den Aufnahmebereich (18) in axialer Richtung (14) zumindest teilweise überlappen, dass die Kanäle (24) endseitig Öffnungen (26, 28) zum Außenumfang (22) des Hülsenabschnitts (16) aufweisen und dass Zulauf (42) und Ablauf (44) zur Förderung des Sperrmediums mittels der Kanäle (24) strömungsverbunden sind.

## Claims

1. Shaft sleeve (12) for a sealing arrangement (10), having a sleeve portion (16) which extends in an axial direction (14) and which comprises a receiving region (18) for a pair (20) of slip rings on the outer circumference (22) of the sleeve portion (16), **characterised in that** the shaft sleeve (12) is formed in one piece and **in that** there are formed in the sleeve portion (16) passages (24) to carry a barrier medium which are oriented in a substantially axial direction (14) and have solid walls radially and which extend along a part of the sleeve portion (16) and at least partly overlap the receiving region (18) in the axial direction (14), and **in that** the passages (24) each have at their ends openings (26, 28) to the outer circumference (22) of the sleeve portion (16).

2. Shaft sleeve (12) according to claim 1, **characterised in that** the passages (24) entirely overlap the receiving region (18) for the pair (20) of slip rings.

3. Shaft sleeve (12) according to claim 1 or 2, **characterised in that** the sleeve portion (16) has a collar (30), for making contact with a slip ring (32), which forms a boundary of the receiving region (18) at one end.

4. Shaft sleeve (12) according to claim 3, **characterised in that** there is arranged on the collar (30), facing towards the receiving region (18), an entraining member (34), which in particular is formed in one piece with the collar (30), for coupling to a slip ring (32) to be secure in rotation therewith.

5. Shaft sleeve (12) according to one of the preceding claims, **characterised in that** the passages (24) each have a cross-section in the form of a sector of a ring.

6. Shaft sleeve (12) according to one of the preceding claims, **characterised in that** first ones of the openings (26) at the ends of the passages (24) are arranged in the collar (30).

7. Shaft sleeve (12) according to one of the preceding claims, **characterised in that** second ones of the openings (28) at the ends of the passages (24) are formed outside the receiving region (18) at the end of the receiving region (18) remote from the first ones of the openings (26) at the ends.

8. Shaft sleeve (12) according to one of the preceding claims, produced by a generative manufacturing process.

9. Sealing arrangement (10), and in particular a mechanical face seal, having a shaft sleeve (12) which has a sleeve portion (16) extending in an axial direction (14), a receiving region (18) formed on the outer circumference (22) of the sleeve portion (16), a pair (20) of slip rings arranged in the receiving region (18), an inlet (42) for feeding a barrier medium to the pair (20) of slip rings and an outlet (44) for discharging the barrier medium from the pair (20) of slip rings, **characterised in that** the shaft sleeve (12) is formed in one piece, there are formed in the sleeve portion (16) passages (24) which are oriented in a substantially axial direction (14) and have solid walls radially and which extend along a part of the sleeve portion (16) and at least partly overlap the receiving region (18) in the axial direction (14), **in that** the passages (24) have at their ends openings (26, 28) to the outer circumference (22) of the sleeve portion (16), and **in that** the inlet (42) and outlet (44) are in flow-permitting communication by means of the passages (24) to allow the barrier medium to be fed.

## Revendications

1. Manchon d'arbre (12) pour un dispositif d'étanchéité (10), ayant un tronçon de manchon (16) s'étendant dans une direction axiale (14), comprenant une zone de réception (18) pour une paire d'anneaux glissants (20) sur la périphérie extérieure (22) du tronçon de manchon (16), **caractérisé en ce que** le manchon d'arbre (12) est formé d'un seul tenant, et **en ce que** des canaux (24) orientés sensiblement dans la direction axiale (14) et fermés radialement sont formés dans le tronçon de manchon (16) pour guider un milieu de barrière, qui s'étendent sur une partie du tronçon de manchon (16) et chevauchent au moins partiellement la zone de réception (18) dans la direction axiale (14), et **en ce que** les canaux (24) présentent chacun des ouvertures (26, 28) de côté d'extrémité vers la circonférence extérieure (22) du tronçon de manchon (16).

2. Manchon d'arbre (12) selon la revendication 1, **caractérisé en ce que** les canaux (24) chevauchent complètement la zone de réception (18) de la paire d'anneaux glissants (20).

3. Manchon d'arbre (12) selon la revendication 1 ou 2, **caractérisé en ce que** le tronçon de manchon (16) comporte une collerette (30) destinée à être en contact avec un anneau glissant (32) qui délimite la zone de réception (18) d'un côté.

4. Manchon d'arbre (12) selon la revendication 3, **caractérisé en ce que** la zone de réception (18) est agencée sur la collerette (30) en regard d'un élément d'entraînement (34) formé en particulier d'un seul tenant avec la collerette (30), pour l'accouplement fixe en rotation d'un anneau glissant (32).

5. Manchon d'arbre (12) selon l'une des revendications précédentes, **caractérisé en ce que** les canaux (24) présentent chacun une section transversale en forme de segment d'anneau.

6. Manchon d'arbre (12) selon l'une des revendications précédentes, **caractérisé en ce qu'**une première des ouvertures de côté d'extrémité (26) des canaux (24) est agencée sur la collerette (30).

7. Manchon d'arbre (12) selon l'une des revendications précédentes, **caractérisé en ce qu'**une seconde des ouvertures de côté d'extrémité (28) des canaux (24) est formée à l'extérieur de la zone de réception (18) sur le côté opposé à la première ouverture de côté d'extrémité (26) de la zone de réception (18).

8. Manchon d'arbre (12) selon l'une des revendications précédentes, fabriqué par un procédé de fabrication génératif.

9. Dispositif d'étanchéité (10), en particulier garniture d'étanchéité à anneau glissant, ayant un manchon d'arbre (12) avec un tronçon de manchon (16) s'étendant dans une direction axiale (14), une zone de réception (18) sur une périphérie extérieure (22) du tronçon de manchon (16), une paire d'anneaux glissants (20) agencée dans la zone de réception (18), une entrée (42) pour guider un milieu de barrière jusqu'à la paire d'anneaux glissants (20) et une sortie (44) pour le retrait du milieu de barrière à partir de la paire d'anneaux glissants (20), **caractérisé en ce que** le manchon d'arbre (12) est réalisé d'un seul tenant, **en ce que** des canaux (24) orientés sensiblement dans la direction axiale (14) et fermés radialement sont formés dans le tronçon de manchon (16), qui s'étendent sur une partie du tronçon de manchon (16) et chevauchent au moins partiellement la zone de réception (18) dans la direction axiale (14), **en ce que** les canaux (24) présentent chacun des ouvertures (26, 28) de côté d'extrémité vers la circonférence extérieure (22) du tronçon de manchon (16), et **en ce que** l'entrée (42) et la sortie (44) sont en communication de fluide pour le transport du milieu de barrière au moyen des canaux (24).
